# EUROPEAN PATENT SPECIFICATION

(11) **EP 4 321 442 B1**
(45) Date of publication and mention of the grant of the patent: **30.09.2026**
(21) Application number: 22382783.3
(22) Date of filing: 11.08.2022
(51) Int. Cl.: B64F 1/36

(54) **SYSTEM FOR CONTROLLING A BAG-DROP PROCESS VIA A MOBILE DEVICE**
SYSTEM ZUR STEUERUNG EINES GEPÄCKANNAHMEVERFAHRENS ÜBER EINE MOBILE VORRICHTUNG
SYSTÈME POUR COMMANDER UN PROCESSUS DE DÉPÔT DE SACS PAR L'INTERMÉDIAIRE D'UN DISPOSITIF MOBILE

(43) Date of publication of application: 14.02.2024
(73) Proprietor: Amadeus S.A.S., 06410 Biot (FR)
(72) Inventor: CANO BRABEZO, Javier, 28108 ALCOBENDAS (ES)
(74) Representative: Samson & Partner Patentanwälte mbB

(56) References cited:
- US-A1- 2016 092 943
- US-A1- 2018 077 546
- US-A1- 2019 139 017
- SITA 2014, 14 March 2014 (2014-03-14), pages 1 - 4, XP055545937, Retrieved from the Internet <URL:http://www.futuretravelexperience.com/wp-content/uploads/2014/03/insight-paper-beacons.pdf> [retrieved on 20190122]

## Description

### FIELD OF THE INVENTION

The present invention is generally related to a computerized system for controlling a bag-drop process via a mobile device.

The webpage https://www.britishairways.com/en-gb/business-travel/articles/self-service-bag-drop shows a bag-drop station, at which the passenger has to guide the bag-drop process via a console fixedly mounted at the bag-drop station.

US 2019/0139017 A1 pertains to detecting the presence of a geolocation device like a Bluetooth^{®} beacon detected by the mobile device in a departure location such as an airport. On detection of a further geolocation device, when the mobile device is close to a self-service function, a self-service function on the mobile device is triggered.

### SUMMARY OF THE INVENTION

The invention is defined by the independent claims. The dependent claims contain optional additional features.

### GENERAL DESCRIPTION, ALSO OF SUPPLEMENTARY EXAMPLES

According to first aspect, a computerized system of controlling a bag-drop process via a mobile device is provided. The computerized system comprises at least one processor and at least one non-volatile memory.

The computerized system is arranged to create a virtual zone in front of a bag-drop station using at least one signal emitter located at the bag-drop station.

A signal strength of signals periodically emitted by the at least one signal emitter may define the dimensions of the virtual zone, as further described below.

A bag-drop station is a station, for example, at an airport, where a user like a flight passenger can drop a bag to be conveyed to the aircraft. At the bag-drop station, typically the weight of the bag is measured and compared to weight limit(s) associated with the flight and/or the passenger/airport policy. Also an association may be made between the bag and the passenger, for example, by scanning a bag-tag already placed on the bag.

The signal emitter(s) located at the bag drop station are, for example, fixedly mounted at the front face of a bag-drop station, such that it faces towards a passenger who wants to carry out a bag-drop procedure. Those signal emitter(s) could be Bluetooth^{®} Beacons, WiFi senders, infrared emitters, NFC Beacons, 3D cameras or the like. There are at least two signal emitters per bag-drop station.

The signals emitted by the at least one signal emitter span a virtual zone in front of the bag-drop station. The signal strength of the signals periodically emitted by the at least one signal emitter and received by the mobile device define the dimension and, hence, the boundaries of the virtual zone. If those signals, for example, have a signal strength above a given signal strength threshold up to a distance of 100 cm, than the virtual zone defined by this signal strength threshold may have a radius of 100 cm around the signal emitter(s). The signal strength drops as a function of the distance to the emitter according to the inverse square law.

A mobile device is arranged to receive the signals emitted by the at least one signal emitter. The mobile device is, for example, the mobile phone of a passenger who wants to check-in his/her bag on the bag-drop station. The mobile device could, however, be any portable computerized device, like a mobile phone, a tablet computer, a laptop, a PDA or the like.

It is determined, based on the signals received from the at least one signal emitter, whether the mobile device is located within a triggering range in the virtual zone. The triggering range marks an area that is closer to the signal emitter(s) and therefore closer to the bag-drop stations than the boundaries of the virtual zone. To provide an example, the triggering range may cover only an area with a radius of 0 to 60 cm or 0 to 30 cm from the signal emitter(s). This may be a range, where the signal strength of the emitted signals has dropped to approximately 70% or 60% or 50% of its initial signal strength.

The mobile device determines whether it is located within this triggering range, for example, by measuring the signal strength of the signals periodically received from the signal emitters. The mobile device may also determine its position relative to the signal emitters via identification information etc. sent by the signal emitters to the mobile device or via trilateration of signals received by a plurality of signal emitters. The signal emitters may also send a range indicator along with the signals, like a Received Signal Strength Indicator (RSSI) value. This RSSI value may be calibrated by the manufacturer of the signal emitter to be the signal strength of the signal emitter at a known distance, typically one meter. Using the known output signal strength of the signal emitter and the signal strength observed by the mobile device, an approximation may be made about the distance between the beacon and the device.

In response to determining that the mobile device is located within the triggering range, the start of a mobile-device controlled bag-drop procedure at the bag-drop station is triggered. The start of the mobile-device controlled bag-drop procedure may involve an interaction by the user of the mobile device, for example, clicking on a link (URL) to a bag-drop website via which the bag-drop process is carried out. The start of the mobile-device controlled bag-drop procedure may also occur automatically, for example, if a bag-drop application on the mobile device is automatically started when the user of the mobile device enters the triggering range.

Once the bag-drop procedure has been started, it is (periodically) determined based on the signals received from the at least one signal emitter, whether the mobile device has left the virtual zone. This determination may also be done, as indicated above, by the mobile device itself by determining the signal strength of the signals received from the signal emitter(s). In this process, also the above-mentioned signal strength indicators (RSSI values) may be used.

The strength of the received signals may have dropped at the boundary of the virtual zone to a process-abort threshold, which may correspond to e.g. 30% or 25% or 20% or 15% of the initial signal strength of the signals emitted by the signal emitter(s).

In response to determining that the mobile device has left the virtual zone, the bag-drop procedure at the bag-drop station is aborted.

Using this mechanism, it is ensured that a mobile device user stays within a given distance to the bag-drop station, given by the boundaries of the virtual zone, when the bag-drop procedure is carried out.

In general, due to the usage of a mobile-device to control the bag-drop procedure, the common fixedly installed consoles at the bag-drop station can be omitted, since the control functions previously conveyed via this console are outsourced to the users mobile device. This reduces the amount of hardware required at the bag-drop station and may also reduce the space needed for bag-drop stations.

Furthermore, it is ensured by the activities carried out by the computerized system described above that the user who wants to carry out the bag-drop procedure at a certain bag-drop station stays within a certain area around this bag-drop station, when the bag-drop procedure is carried out. This also ensures that control signals sent from the mobile device to the bag-drop station or feedback signals sent from the bag-drop station to the mobile device can actually received by the respective intended recipient. Furthermore, this also ensures that the user is close to the bag-drop station if, for example, the bag is not accepted and has to be removed by the user.

If (a) 3D camera(s) is/are used as a signal emitter(s), the cameras may continuously detect the position of the mobile device (or the user of the mobile device). The mobile device may determine whether it is inside or outside the virtual zone or the triggering range based on signals emitted by the camera to inform the mobile device about its position. The camera may also determine directly whether the mobile device is inside or outside the virtual zone or its triggering range and send this information to the mobile device.

In some examples, the computerized system is arranged to identify, by the mobile device, whether the signal strength of the received signals exceeds a trigger-threshold, wherein the signal strength of the received signals depends on the distance between the mobile device and the at least one signal emitter.

As mentioned above, identifying whether the signal strength of the received signals exceeds the trigger threshold is a possible way of determining whether the mobile device is located within the triggering range. The triggering range may cover only an area with a radius of 0 to 60 cm or 0 to 30 cm from the signal emitter(s), an area in which the signal strength of the emitted signals drops from 100% to approximately 70% or 60% or 50% of its initial signal strength. The trigger threshold may be set, using the above-mentioned received signal strength indicators (RSSI) - indicating which signal strength corresponds to which distance. The trigger threshold for the received signal strength may be pre-set (e.g. set before the mobile device enters the virtual zone).

In response to identifying that the signal strength of the received signals exceeds the trigger threshold, for example, the start of the mobile-device controlled bag-drop procedure at the bag-drop station is triggered. As mentioned above, this start of the mobile-device controlled bag-drop procedure may occur automatically, or an action by a user of the mobile device may be triggered which eventually starts the bag-drop procedure.

After the bag-drop procedure has been started, it is determined, by the mobile device, whether the signal strength of the received signals is below a process-abort threshold. As mentioned above, the boundary of the virtual zone may be marked by the distance between signal emitter and mobile device at which the strength of the received signals has dropped to this process-abort threshold. The process-abort threshold for the signal strength may correspond to e.g. 30% or 25 or 20% or 10% of the initial signal strength of the signals emitted by the signal emitter(s).

In response to identifying that the signal strength of the received signals has dropped below the process-abort threshold, the bag-drop procedure at the bag-drop station is aborted.

In some examples, the computerized system is further arranged to identify, by the mobile device, whether the signal strength of the received signals has dropped below an alert threshold and, in response to a drop of the signal strength of the received signals below the alert threshold, trigger an alert on the mobile device.

The alert threshold is a threshold for the signal strength that lies between the trigger threshold and the process-abort threshold. The alert threshold may correspond to a pre-set threshold that corresponds to a lower signal strength than the trigger threshold but to a higher signal strength than the process abort threshold. To provide an example, the trigger threshold may correspond to 70% of the initial signal strength of the signal transmitter(s), the alert threshold may correspond to 40% of this initial signal strength and the process-abort threshold may correspond to 20% of the initial signal strength.

The purpose of the alert to the mobile device triggered by the signal strength dropping below the alert threshold may be to remind the user to stay close enough to the bag-drop station while the mobile-device controlled bag-drop procedure is performed.

Only if the user of the mobile device actually leaves the virtual zone, which may correspond to the received signal strength dropping below the process-abort threshold, the process is aborted.

In some examples, the at least one signal emitter is a Bluetooth^{®} Beacon for indoor geofencing. To provide an example, two, three or more Bluetooth^{®} Beacons may be arranged at the front face of a bag-drop station.

In general, Bluetooth^{®} Beacons are hardware transmitters - a class of Bluetooth low energy (LE) devices that broadcast their identifier to nearby portable electronic devices. The technology enables smartphones, tablets and other mobile devices to perform actions when they are in range of a Bluetooth^{®} Beacon. The Bluetooth^{®} Beacons may use Bluetooth^{®} low energy proximity sensing to transmit a universally unique identifier picked up by a compatible app or operating system on the mobile device. This identifier and several bytes sent with it may be used (e.g. indicators the signal strength of the signals received by the mobile device, above-mentioned RSSI indicators etc.) when determining the device's physical location or triggering a location-based action like the start of the mobile-device controlled bag-drop process via a push notification.

As mentioned above, with multiple Bluetooth^{®} Beacons at and around the bag-drop station trilateration could be used to estimate the mobile device's position. The Bluetooth^{®} Beacons could also report their identity, wherein each Bluetooth^{®} Beacon identity could be associated with a different bag-drop station.

The Bluetooth^{®} Beacons may be used to provide a sort of indoor geofencing solution. The virtual zone corresponds here to an (outer) geofence spanning wider from the bag-drop station than an (inner) geofence that would correspond to the triggering range.

A plurality of bag-drop stations is provided, wherein each of the bag-drop stations is provided with signal emitters to define a virtual zone in front of the respective bag-drop station. The dimensions of the virtual zones of the respective bag-drop stations are chosen and the distance between the respective at least one signal emitter of different bag-drop stations is chosen such that the virtual zones of the bag-drop stations do not overlap.

Several bag-drop stations may be positioned close to each other but with a distance between their respective signal emitter(s) that their respective virtual zones do not overlap. The distance between the respective signal emitter(s) of the bag-drop stations as well as the dimensions of their respective virtual zones and, in particular, the dimensions of their respective triggering ranges is at least chosen as such that the respective triggering ranges of the respective virtual zones do not overlap. This ensures that a mobile device cannot be triggered to start a mobile-device based bag-drop procedure by two bag-drop stations with signals emitters at the same time. The distance between the signal emitter(s) of different bag-drop stations of may lie in the range between 150 cm and 200 cm.

The mobile device may receive signals from both signal emitter(s) associated with two or more bag-drop stations alike. However, if the mobile is located inside the triggering range of a particular bag-drop station, the signal strength of the received signals only lies above the trigger threshold for this bag-drop station, but not for all the other bag-drop stations. Therefore, the start of a bag-drop procedure is only started at this bag-drop station.

Once the bag-drop procedure has been started, the mobile device may only listen to the signal emitter(s) that send an identifier with them that is associated with the bag-drop station by which the start of the bag-drop procedure was triggered. Only signals of these signal emitters may be used by the mobile device to determine whether the signal strength lies above or below the process-abort threshold, which may correspond to the mobile device being located inside or outside of the virtual zone of the respective bag-drop station, respectively.

In some examples, at least one signal of the signals emitted by the at least one signal emitter includes an URL via which the bag-drop procedure can be started. In some examples, the signal containing the URL is pushed via the signal emitter to the mobile device.

The URL, upon pushed to the mobile device, may automatically occur on the display of the mobile device, such that the mobile user can click on that URL link to activate the bag-drop procedure.

The URL may point to a web-server, such as an application server, which is in communication with the mobile device when controlling the bag-drop procedure at the bag-drop station. The web-resource pointed to by the URL may serve as a back-end for the bag-drop procedure control conveyed by the mobile device.

In some examples, in response to a user of the mobile device actuating the URL delivered via the signal emitter, a flow of the bag-drop activities is mirrored on the mobile device.

The following activities, controlled via the mobile device, which may be in communication with an application server serving as an bag-drop application back-end for the mobile device may be carried out:
The weight of the piece of baggage may be measured at the bag-drop station. The measured weight may be displayed to the user on the mobile device for information purposes.

The measured weight is, for example, checked against a departure control system (DCS). This may be done to check if the passenger is entitled to check-in a piece of baggage with a particular weight.

Subsequently, the user may be prompted via the mobile device to acknowledge the completion of this activity.

A bag-tag on the piece of baggage may be scanned via the mobile device in a further activity. Alternatively this could also be done automatically via cameras mounted at the bag-drop station. A successful completion of this activity may be fed back to the user via the mobile device.

The measured weight may then be checked against a weight allowance, for example, the weight allowance implemented by flight control. The user may be informed about the outcome of this weight allowance check via the mobile device. If the outcome of this check is positive, the bag may be accepted. The user may be informed about this outcome via the mobile device.

In some examples, a bag-drop application on the mobile device is automatically started in response to the mobile device identifying that the signal strength of the received signal exceeds the trigger-threshold, wherein a flow of the bag-drop activities is mirrored on the mobile device.

Instead of prompting the user via a pushed URL to start the mobile device controlled bag-drop procedure manually, the bag-drop procedure may also be started automatically, when the mobile device enters the triggering range. This may be achieved, for example, by the mobile device receiving a application start indicator via the signal emitter(s) to automatically open a bag-drop application on the mobile device.

In some examples, the mobile-device controlled bag-drop procedure is carried out via an application server with which the mobile device communicates. As mentioned above, the application server may function as a back-end for the bag-drop application performed on the mobile device.

In some examples, the mobile device communicates with the bag-drop station by means of a mini PC and programmable logic controllers associated with the bag-drop station in order to control the bag-drop process.

The bag-drop procedure may be controlled via the mobile device by way of a mini PC and programmable logic controllers associated with the bag drop station. Via the mini PC and the programmable logic controllers, for example, weighing sensors at the bag-drop station as well as a conveyor belt at the bag-drop station may be controlled according to the control commands received from the mobile device.

According to a second aspect, a method of controlling a bag-drop process via a mobile device is provided. The method comprises creating a virtual zone in front of a bag-drop station using at least one signal emitter located at the bag-drop station. The method further comprises receiving, by the mobile device, the signals emitted by the at least one signal emitter, as well as determining based on the signals received from the at least one signal emitter, whether the mobile device is located within a triggering range in the virtual zone. In response to determining that the mobile device is located within said triggering range, the start of a mobile-device controlled bag-drop procedure at the bag-drop station is triggered. The method further comprises determining, based on the signals received from the at least one signal emitter, whether the mobile device has left the virtual zone, and, in response to determining that the mobile device has left the virtual zone, aborting the bag-drop procedure at the bag-drop station.

The method may comprise any the activities the computerized system according to the first aspect is arranged to carry out.

According to a third aspect, a computer program product comprising program code instructions stored on a computer readable medium to execute the activities the computerized system according to the first aspect is arranged to carry out, when said program is executed on a computer device, is provided.

### BRIEF DESCRIPTION OF THE DRAWINGS

Examples of the invention are now described, also with reference to the accompanying drawings, wherein
- Fig. 1: schematically illustrates a bag-drop station equipped with Bluetooth^{®} Beacons emitting signals received by a mobile phone, wherein via those signals a virtual zone is spanned in front of the bag-drop station and the signals are received by a mobile phone within a triggering range in the virtual zone,
- Fig. 2: schematically illustrates the bag-drop station of Fig. 1, wherein the signals are received by the mobile phone within the virtual zone, but outside the triggering range in the virtual zone,
- Fig. 3: schematically illustrates the bag-drop station of Figs. 1 and 2, wherein signals are received by the mobile phone outside the virtual zone,
- Fig. 4: schematically illustrates bag-drop stations like those shown in Figs. 1 or 2 positioned with a distance to each other, wherein the virtual zones spanned in front of the bag-drop stations do not overlap,
- Fig. 5: schematically illustrates the bag-drop activities carried out at the bag-drop station and mirrored on the mobile phone which controls the bag-drop process in communication with an application server,
- Fig. 6: illustrates a generic schematic block diagram of a mobile device controlled bag-drop procedure, ensuring that the bag-drop process is aborted if the passenger leaves the virtual zone,

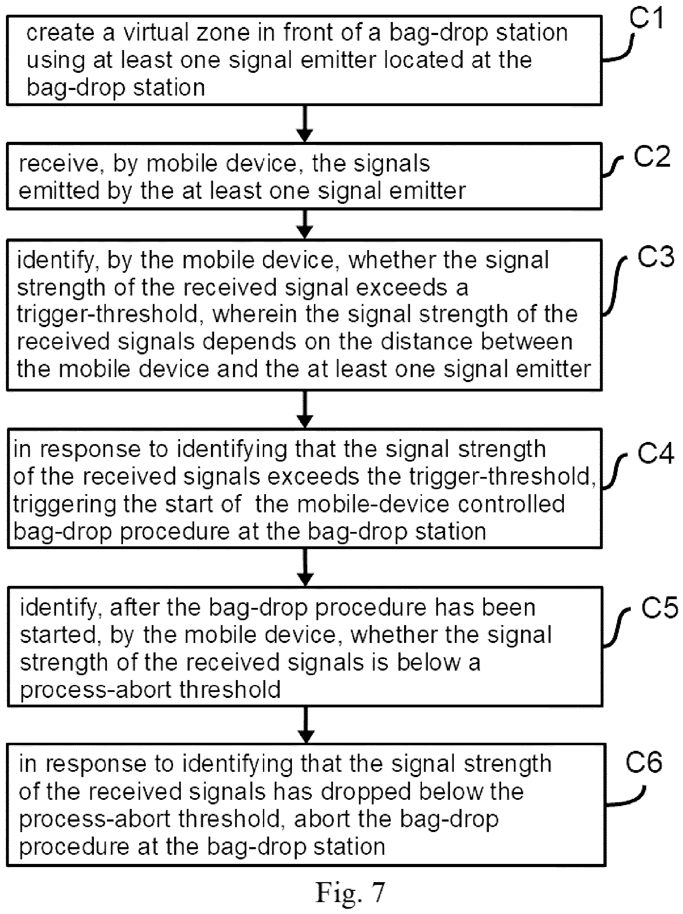

- Fig. 7: illustrates a further generic schematic block diagram of a mobile device controlled bag-drop procedure, ensuring that that the bag-drop process is aborted if the user leaves the virtual zone
- Fig. 8: illustrates a flow chart of an example of a mobile device controlled bag-drop procedure, ensuring that the bag-drop procedure is aborted if the user leaves the virtual zone and that the user is alerted if s/he is almost located outside the virtual zone,
- Figs. 9A to 9C: illustrate a detailed block diagram of a mobile device controlled bag-drop procedure, ensuring that the bag-drop process is aborted if the user leaves the virtual zone, with the start of the bag-drop procedure being triggered by an URL pushed to the mobile phone via signal emitters as shown in Figs. 1 to 4,
- Figs. 10A to 10C: illustrate a detailed block diagram of a mobile device controlled bag-drop procedure, ensuring that the bag-drop process is aborted if the user leaves the virtual zone, with the start of the bag-drop procedure being triggered automatically at a bag-drop application on the mobile device,
- Fig. 11: a schematically illustrates an example of a computerized system to carry out any of the activities illustrated by Figs. 5 to 10.

The drawings and the description of the drawings are of examples of the invention and are not of the invention itself. Like reference signs refer to like elements throughout the following description of examples.

### DESCRIPTION OF EXAMPLES

It is noted that throughout the description of examples, the mobile device is represented as a mobile phone, although any other portable computerized device, like a tablet PC etc., could be used instead of a mobile phone.

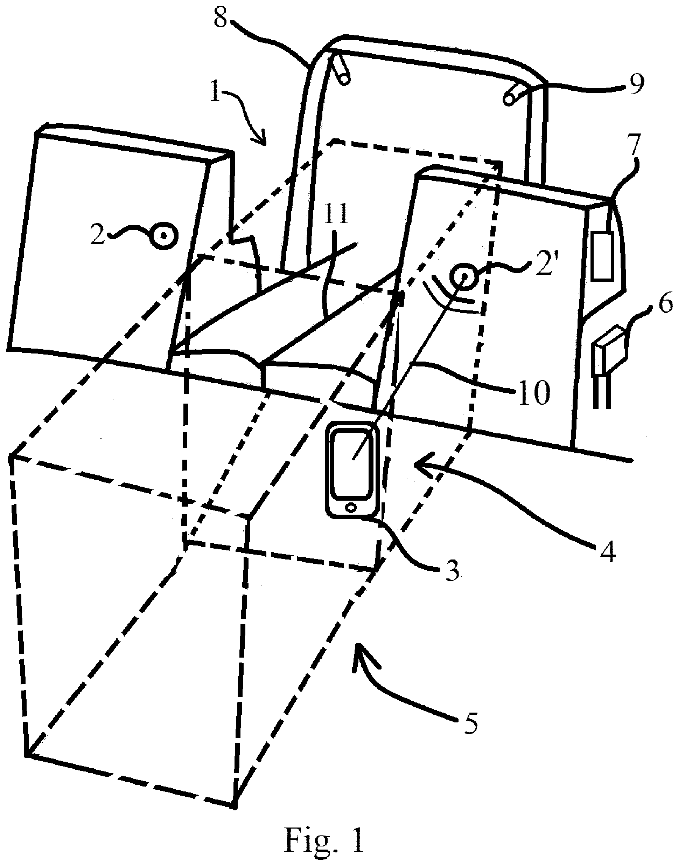

A bag-drop station equipped with Bluetooth^{®} Beacons emitting signals received by a mobile phone, wherein via those signals a virtual zone is spanned in front of the bag-drop station and the signals are received by a mobile phone within a triggering range in the virtual zone is schematically illustrated by **Fig 1****.**

The bag-drop station 1 is equipped with two signal emitters in Bluetooth^{®} Beacons 2, 2' on either side of a conveyor belt 11. The Bluetooth^{®} Beacons 2, 2' periodically emit signals 10, also indicated by outgoing waves at Bluetooth^{®} Beacon 2'. The Bluetooth^{®} Beacons may be fixedly mounted on the front side of the bag-drop station so that they can eradiate their signals into the area in front of the bag-drop station 1. The strength of these signals defines the dimensions of the virtual zone 5 in front of the bag-drop station 1. The dimensions of the virtual zone are indicated by the dashed-line box in front of bag-drop station 1 in Fig. 1. Please note that in Fig. 1 the virtual zone has the form of a box, for illustration purposes only. The form of the virtual zone may be rather spherical instead.

The function of the virtual box 5 is to define an area, in which a bag-drop method can be controlled by means of a mobile device, like a mobile phone 3. The virtual zone 5 is an area in which a user of the mobile phone 3 is supposed to stay, when controlling the bag-drop procedure via the mobile phone 3 and the bag-drop procedure is in progress. The virtual box 5 is, for example, created by means of the Bluetooth^{®} Beacons 2, 2' and corresponds to a virtual geofencing area.

There is a triggering range 4 within the virtual zone 5. In the scenario depicted by Fig. 1, the mobile phone 3 is located within this triggering range 4 with respect to the signal emitters in the form of Bluetooth^{®} Beacons 2, 2'. If the mobile phone 3 is located within the triggering range 4, the mobile phone 3 is located close enough to the Bluetooth^{®} Beacons 2, 2' so that a bag-drop procedure controlled via the mobile phone 3 can be triggered/started. The mobile phone 3 may continuously check - for example via a bag-drop application in standby - whether it is located within said triggering range 4. To do so, the mobile phone 3 may measure the signal strength of the signals 10 periodically received by the signal emitters (here: Bluetooth^{®} Beacons 2, 2'). If the signal strength exceeds a trigger threshold, the mobile device identifies that it is located within the triggering range and the start of the bag-drop procedure is triggered. The signal strength at the trigger threshold may therefore mark the boundaries of the triggering range. The triggering range may cover 0 to 80 cm, 0 to 60 cm, or 0 to 30 cm distance (e.g. radius) from the signal emitters (Bluetooth^{®} Beacons 2, 2').

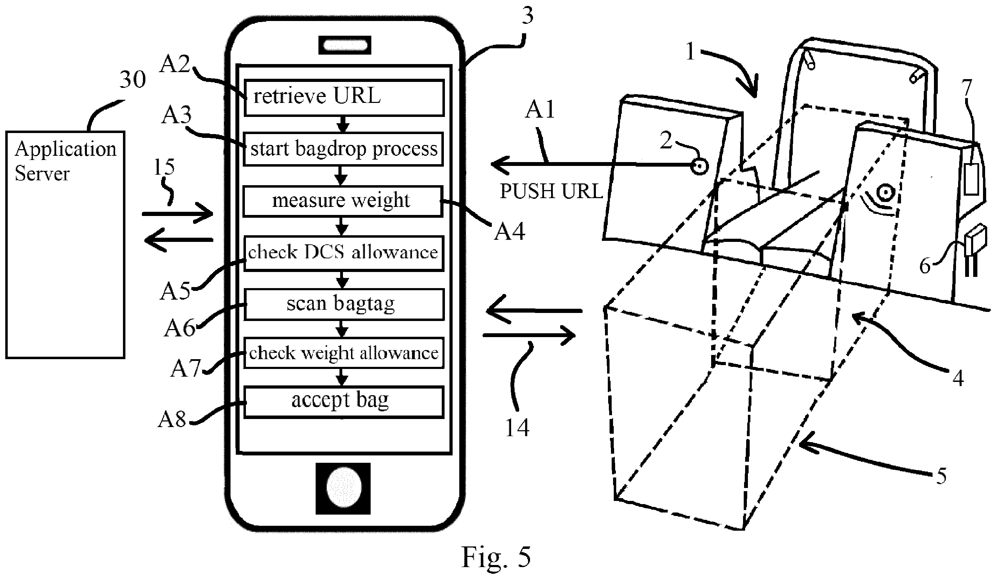

To start the bag-drop procedure, the mobile device 3 may receive a PUSH signal from the Bluetooth^{®} Beacons 2, 2' that may include an URL. This URL may be included in each signal periodically emitted by the Bluetooth^{®} Beacons 2, 2'. This URL may be displayed on the mobile device 3. The user can then click on this URL on the mobile phone 3 display to start a bag-drop procedure via an application server (see Fig. 5). The individual activities of the bag-drop procedure like weighting, checking DCS allowance etc., may be mirrored to the mobile phone and the user may be obliged by the bag-drop procedure to confirm every activity once it is finished.

The mobile phone may also actively query the signal strength of the signal emitters (here: Bluetooth^{®} Beacons 2, 2') by triggering the Beacons around it in order to measure the signal strength to determine whether the mobile phone 3 is still within the virtual zone 5 or even within the triggering range 4 of the virtual zone 5.

Once the bag-drop procedure has been started, the process may encompass weighing a piece of baggage, checking the baggage weight against a threshold, scanning a bag-tag either manually via the mobile phone 3 or via cameras 9 mounted on an arch 8. The bag-drop procedure may be controlled via the mobile device (here: mobile phone 3) by way of a mini PC 6 and programmable logic controllers 7 associated with the bag drop station 1.

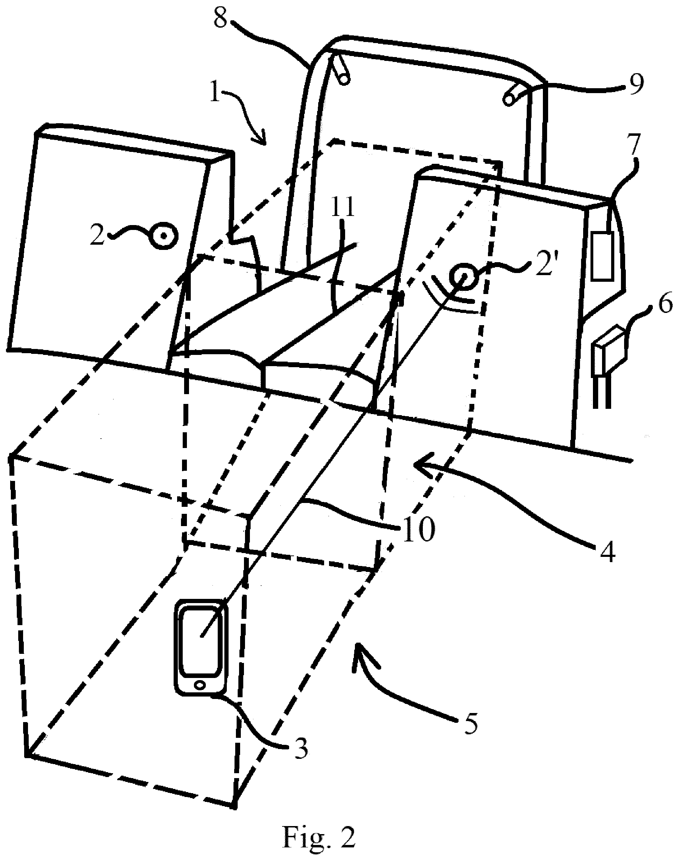

The bag-drop station of Fig. 1, wherein the signals are received by the mobile phone within the virtual zone, but outside the triggering range in the virtual zone is schematically illustrated by **Fig. 2****.**

The mobile device, here depicted as mobile phone 3, is located within the virtual zone 5, but outside the triggering range 4 within said virtual zone 5. Hence, the mobile device 3 receives the signals 10 from the Bluetooth^{®} Beacons 2, 2' there.

When the bag-drop process has not yet been started, and the signal 10 is the first signal emitted from the Bluetooth^{®} Beacons the mobile phone 3 receives, nothing will happen. The mobile phone 3 will not be triggered to start a bag-drop process, since the signal is not received within the triggering range.

If however, the mobile device has received the signal 10 within the triggering range before (as depicted in Fig. 1) and the bag-drop procedure has been started, for example, by actuating the URL received via the Bluetooth Beacon signal 10 emitted by Bluetooth Beacons 2, 2' before, the bag-drop procedure will not be aborted as long as the mobile device 3 stays within the virtual zone 5. The virtual zone 5 may span a distance (e.g. radius) from the Bluetooth^{®} Beacons of 0 to 200 cm, preferably 0 to 150 cm.

The mobile device 3 may detect that it is within the boundaries of the virtual zone 5, by detecting the signal strength of the signal 10 emitted by the Bluetooth^{®} Beacons 2, 2' and comparing this signal strength with a process-abort threshold. As long as the determined strength of the received signal 10 is above (or equal to) the process-abort threshold, the bag-drop procedure stays active.

Hence, a signal strength received by the mobile device (here: mobile phone 3) that is equal to the process-abort threshold may mark the outer boundaries of the virtual zone 5.

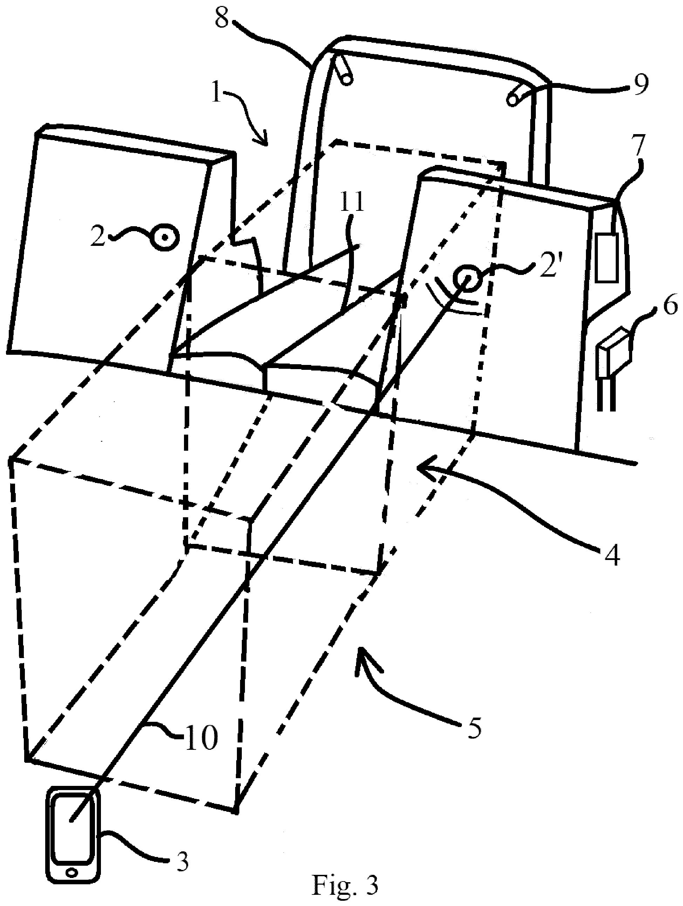

The situation in which the mobile phone 3 has left the virtual zone is schematically illustrated by Fig. 3.

The mobile phone 3 may receive a signal 10 there from the Bluetooth^{®} Beacons for which the mobile phone determines a signal strength that is below the process-abort threshold.

In response to this determination, the bag-drop procedure is aborted.

This mechanism ensures that the user carrying the bag-drop procedure controlled via the mobile phone 3 stays within a certain perimeter given by the virtual zone, around the corresponding bag-drop station 1, as long as the bag-drop procedure is performed.

Once the bag-drop procedure has been completed, the user may finish the bag-drop procedure manually via the mobile 3.

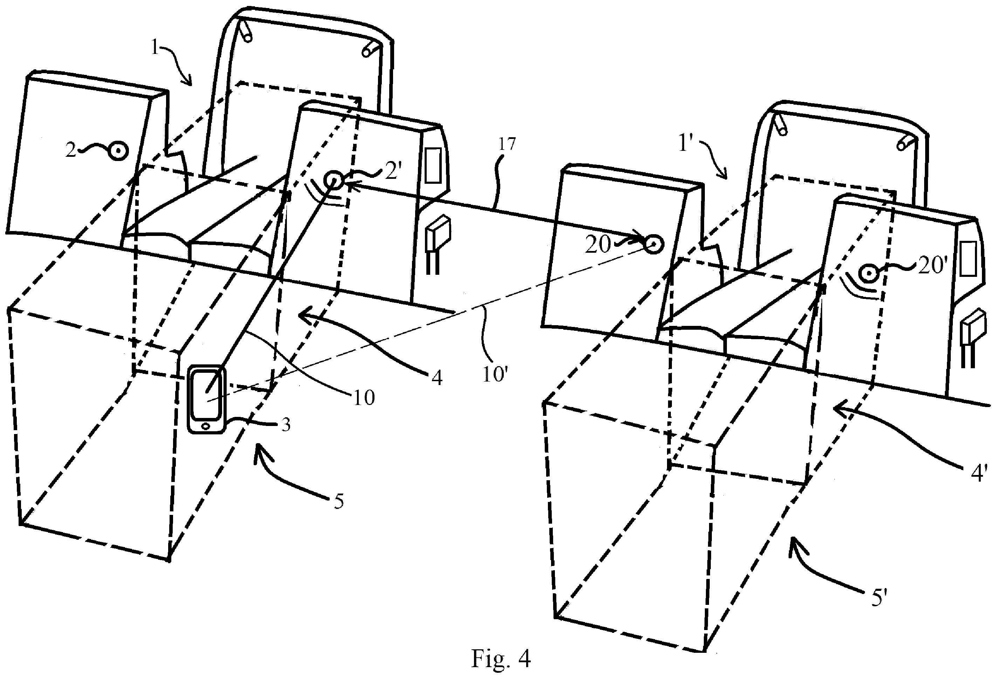

Bag-drop stations positioned with a distance to each other, wherein the virtual zones spanned in front of the bag-drop stations do not overlap, is schematically illustrated by **Fig. 4****.**

In the arrangement illustrated by Fig. 4, there are two bag drop stations 1, 1' which are positioned side by side. This distance 17 between the Bluetooth^{®} Beacons 2, 2' and Bluetooth^{®} Beacons 20, 20' at the respective bag-drop stations 1,1' and also the dimensions of the virtual zones 5, 5' in front of the respective bag-drop stations 1, 1' are chosen as such that the respective virtual zones 5, 5' do not overlap. What at least should be ensured is that the triggering ranges 4, 4' of the respective virtual zones 5, 5' do not overlap, to avoid that a mobile phone is triggered at the same time by different bag-drop stations 1, 1'.

In the arrangement illustrated by Fig. 4, the mobile device 3 is located within the virtual zone 5 of bag-drop station 1 - hence, outside the virtual zone 5' in front of the bag-drop station 1'.

However, the mobile device 3 may receive signals 10, 10' from both Bluetooth^{®} Beacons 2, 2' associated with bag-drop station 1 and Bluetooth^{®} Beacons 20, 20' associated with bag-drop station 1' alike. The distance 17 Between the Bluetooth^{®} Beacons 2, 2' at bag-drop station 1 and the Bluetooth Beacons 20, 20' at bag-drop station 1' may lie between 150 and 200 cm.

However, since mobile phone 3 is located outside the virtual zone 5' of the bag-drop station 1', the signal strength 10' detected by the mobile phone 3 from the Bluetooth^{®} Beacons 20, 20' located at bag-drop station 1' is below the process-abort threshold. These signals are hence ignored by the mobile phone 3.

If a bag-drop procedure at bag-drop station 1 has already been started under the control of mobile phone 3, the bag-drop procedure will continue, since the mobile phone 3 continuously receives signals 10 from Bluetooth^{®} Beacons 2, 2' with a signal strength that indicate that the mobile phone 3 is within the virtual zone 5 in front of the bag drop station 1.

If no bag-drop procedure has been started yet via mobile phone 3, the start of a bag-drop procedure will not be triggered at mobile phone 3, since the mobile phone 3 is located outside the triggering range 4 in the virtual zone 5 and outside the triggering range 4' in the virtual zone 5'.

Bag-drop (control) activities carried out at the bag-drop station and mirrored on the mobile phone, which controls the bag-drop process in communication with an application server, are schematically illustrated by **Fig. 5****.**

It is assumed that the mobile phone 3 is at least initially located in the triggering range 4 of the virtual zone 5 in front of bag-drop station 1 in the schematic illustration given by Fig. 5.

The Bluetooth^{®} Beacon 2 periodically emits signals, wherein all of these signals or at least some of these signals include an URL to trigger the start of the bag-drop procedure. This URL is pushed in this manner towards the mobile device 3 located within the triggering range 4 in the virtual zone 5 in an activity A2. In the activity A2 the URL is also retrieved by the mobile phone 3 and the user of the mobile phone 3, for example, clicks on the URL presented on the display to open the URL in order to start the bag-drop process in an activity A3.

The following activities A3 to A8 are activities that are controlled via the mobile device 3, which is in communication 15 with an application server 30, which may serve as an bag-drop application back-end for the mobile device 3. Computation resource intensive parts of the bag-drop procedure may be performed on the application server 30 and processing results may be communicated to the mobile device 3. The mobile phone 3 may also be equipped with a bag-drop app that enables the control of the bag-drop procedure via the mobile phone 3 alone, without the need of an application server 30 as back-end.

The bag-drop activities performed on the bag-drop station 1 are mirrored on the mobile device 3. To provide an example, as the weight of the piece of baggage is measured in activity A3, the measured weight of the piece of baggage measured at the bag-drop station 1 may be displayed to the user for information purposes. The measured weight is, for example, checked against a departure control system (DCS) allowance in an activity A5. This may be done to check if the passenger is entitled to check-in a piece of baggage with a particular weight.

Subsequently the user may be prompted via the mobile phone 3 to acknowledge the completion of this activity.

A bag-tag on the piece of baggage may be scanned via the mobile phone 3 in an activity A6. Alternatively this could also be done automatically via cameras (see Fig. 1).

In an activity A7, the weight measured in activity A4 is checked against a weight allowance, for example, the weight allowance implemented by flight control. The user may be informed about the outcome of this weight allowance check via the mobile phone 3. If the outcome of this check is positive, the bag may be accepted in an activity A8. The user may be informed about this outcome via the mobile phone 3.

Through the activities A3 to A8, beginning with the start of the bag drop process in activity A3 and the acceptance of the bag in activity A8, the mobile device 3 is in communication with the bag-drop station 1 via the mini PC 6 and the programmable logic controllers 7 associated with the bag-drop station 1 in order to control the bag-drop process via the mobile phone 3 and to mirror the bag-drop process on the mobile phone 3.

The bag-drop control architecture via mobile phone 3 as schematically illustrated by Figs. 1 to 5 lead to a reduction of hardware that has to be installed at the bag-drop station. There is no need for a fixedly installed control console at the bag-drop station, since the control functions are outsourced to the mobile phone 3 of the user.

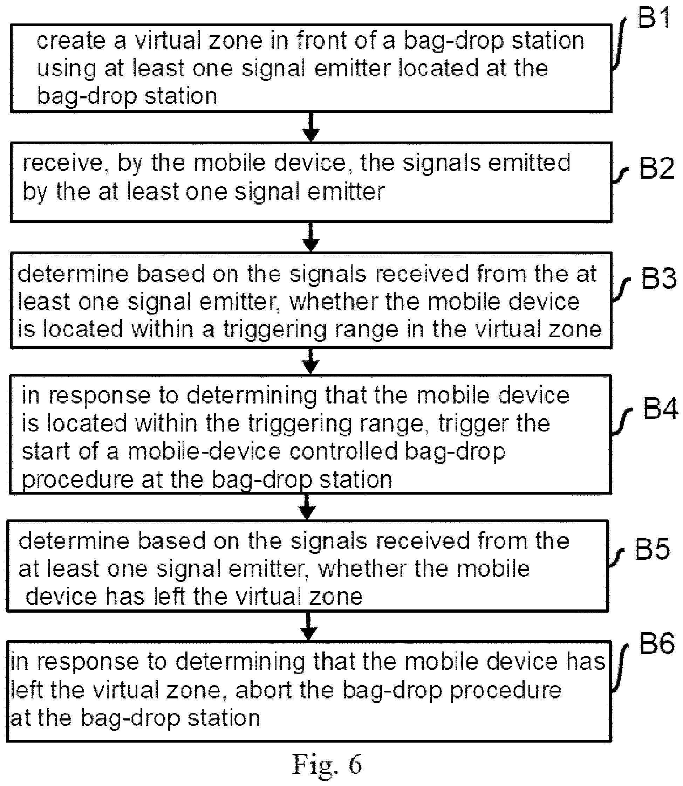

A generic schematic block diagram of a mobile device controlled bag-drop procedure, ensuring that the bag-drop process is aborted if the passenger leaves the virtual zone is illustrated by **Fig. 6****.**

In an activity B1, a virtual zone is created in front of a bag-drop station using at least one signal emitter (see Bluetooth^{®} Beacons 2, 2', 20, 20' in Figs. 1 to 5) located at the bag-drop station.

In an activity B2, the mobile device receives the signals emitted by the at least one signal emitter.

In an activity B3, it is determined based on the signals received from the at least one signal emitter, whether the mobile device is located within a triggering range in the virtual zone. This determination is typically done by the mobile device.

In an activity B4, in response to determining that the mobile device is located within the triggering range, the start of a mobile-device controlled bag-drop procedure at the bag-drop station is triggered.

In an activity B5, it is determined based on the signals received from the at least one signal emitter, whether the mobile device has left the virtual zone. This determination can also be done by the mobile device.

In an activity B6, in response to determining that the mobile device has left the virtual zone, the bag-drop procedure at the bag-drop station is aborted.

In an activity C1, a virtual zone in front of a bag-drop station is created using at least one signal emitter located at the bag-drop station.

In an activity C2, the signals emitted by the at least one signal emitter are received by the mobile device.

In an activity C3, it is identified, by the mobile device, whether the signal strength of the received signals exceeds a trigger threshold, wherein the signal strength of the received signals depends on the distance between the mobile device and the at least one signal emitter.

In an activity C4, in response to identifying that the signal strength of the received signals exceeds the trigger-threshold, the start of the mobile-device controlled bag-drop procedure at the bag-drop station is triggered.

In an activity C5, it is identified, after the bag-drop procedure has been started, by the mobile device, whether the signal strength of the received signals is below a process-abort threshold.

In an activity C6, in response to determining, by the mobile device, that the signal strength of the received signals has dropped below the process-abort threshold, the bag-drop procedure at the bag-drop station is aborted.

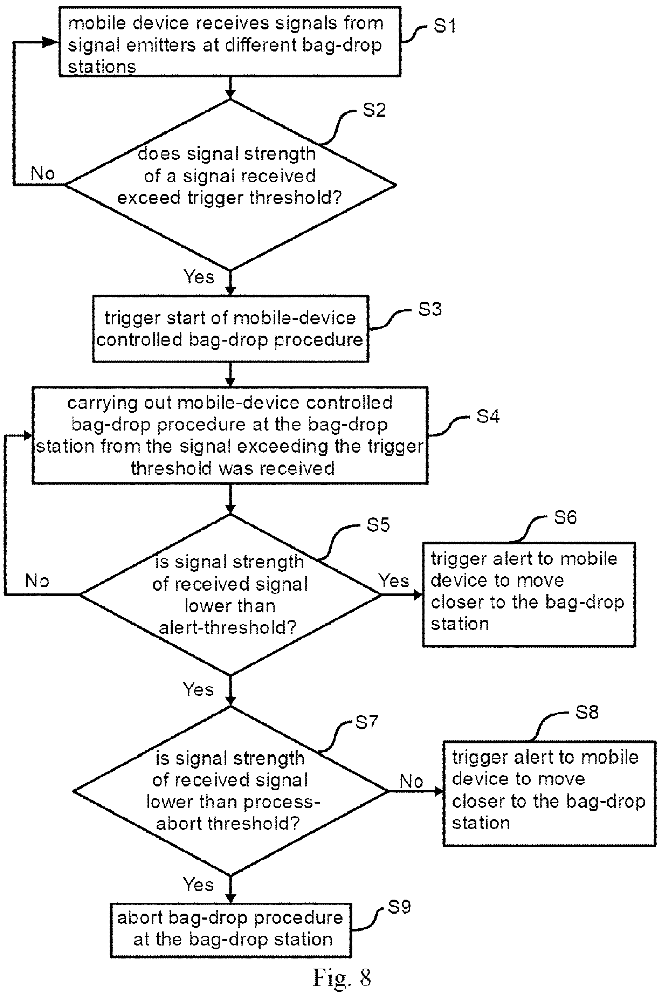

A flow chart of an example of a mobile device controlled bag-drop procedure, ensuring that the mobile-device controlled bag-drop process is aborted if leaves the virtual zone and that the user is alerted if s/he is almost located outside the virtual zone, is illustrated by **Fig. 8****.**

In an activity S1, the mobile device receives signals from signal emitters at different bag-drop stations via their respective signal emitters like Bluetooth^{®} Beacons.

In an activity S2, it is checked whether the signal strength of the signals received exceed a trigger threshold. If the outcome of this check is negative, the mobile device continues to receive signals from different bag-drop stations and/or continues to scan for signals from different bag-drop stations.

If the outcome of the check activity S2 is positive, in an activity S3 the start of a mobile-device controlled bag-drop procedure is triggered, for example, by pushing the URL to initiate the bag-drop procedure towards the mobile phone via the signal emitter(s). The signal containing the URI may further include an identifier to identify the signal emitter and/or the bag-drop station to which the signal emitter belongs. Since the mobile phone is only close enough to one bag-drop station to be within the triggering range of the virtual zone spanned by the signals emitters of this bag-drop station, the bag-drop procedure is only triggered at the bag-drop station in front of which the user of the mobile device stands.

In an activity S4, the mobile-device controlled bag-drop procedure is carried out at the bag-drop station from which the signal exceeding the trigger threshold was received.

When carrying out the bag-drop procedure, the activities within this procedure carried out at the bag-drop station are mirrored at the mobile device (see Fig. 5).

While activity S4 is still ongoing repeatedly checks according to an activity S5 are performed, e.g. by the mobile device, whether the strength of the signals received is lower than an alert threshold. If this is not the case, the bag-drop procedure in activity S4 continues.

If it is however determined in activity S5 that the signal strength of the received signal is lower than the alert threshold am alert is triggered to the mobile device to move closer to the bag-drop station in activity S6.

It is also repeatedly checked whether the signal strength of the received signals is lower than a process-abort threshold in activity S7. If this is not the case, sending a trigger alert to the mobile device to move closer to the bag-drop station in an activity S8 (like in S7) is the only measure (still) applied here.

However, if it is determined that the signal strength of the received signal is lower than the process-abort threshold, the bag-drop procedure at the bag-drop station is aborted in an activity S9.

The trigger threshold for the signal strength may be significantly higher than the alert threshold, such as 130%, 150%, 200% or 300% of the alert threshold , whereas the alert threshold may not be as much higher than the process-abort threshold, such as only 110% or 120% of the process-abort threshold.

The alert-threshold can also be not present at all, such that mobile phone only repeatedly checks according to activity S7, whether the signal strength of the received signals is lower than the process-abort threshold. In this case, the activities S5 and S6 and S8 would not be present. The bag-drop procedure would be aborted in activity S9 without triggering an alert (activities S6 and S8) first.

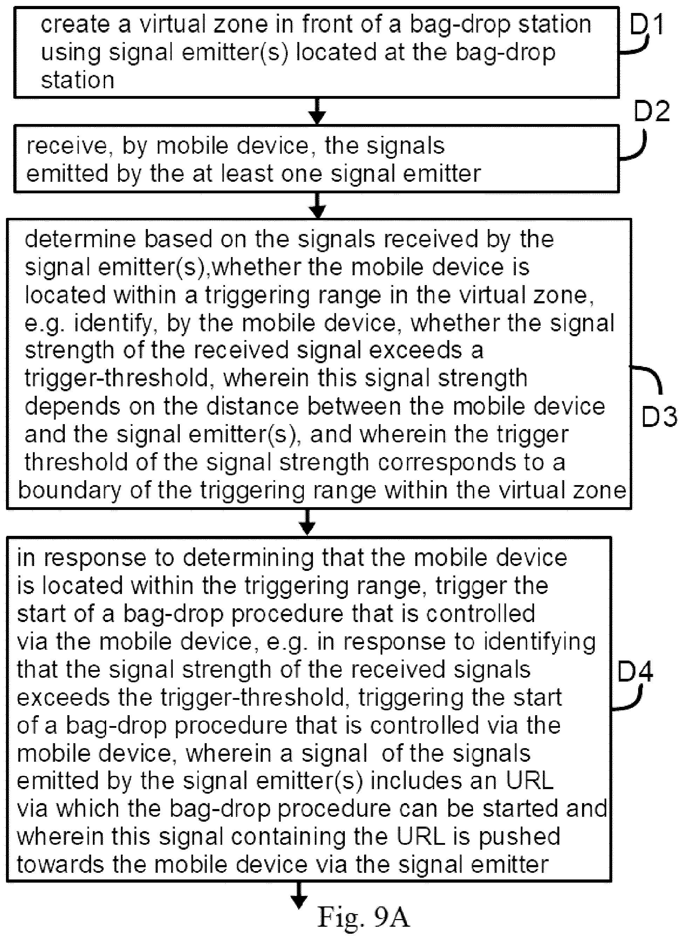

A detailed block diagram of a mobile device controlled bag-drop procedure, ensuring that the bag-drop process is aborted if the user leaves the virtual zone, with the start of the bag-drop procedure being triggered by an URL pushed to the mobile phone via signal emitters is illustrated by **Figs 9A to 9C****.**

In an activity D1 (see Fig. 9A), a virtual zone in front of the bag-drop station is created using signal emitter(s) located at the bag-drop station.

In an activity D2, the signals emitted by the at least one signal emitter are received by the mobile device.

In an activity D3, it is determined based on the signals received by the signal emitter(s), whether the mobile device is located within a triggering range in the virtual zone. To provide an example for how this is done: It is identified, by the mobile device, whether the signal strength of the received signal exceeds a trigger-threshold, wherein the signal strength depends on the distance between the mobile device and the signal emitter(s), and wherein the trigger threshold of the signal strength corresponds to a boundary of the triggering range within the virtual zone (the area where the signal strength received by the mobile device is above the trigger threshold corresponds to the triggering range).

In an activity D4, in response to determining that the mobile device is located within the triggering range, the start of a bag-drop procedure that is controlled via the mobile device is triggered. To provide an example of how this is done: In response to identifying that the signal strength of the received signals exceeds the trigger-threshold, the start of a mobile-device controlled bag-drop procedure at the bag-drop station is triggered, wherein a signal of the signals emitted by the signal emitter(s) includes an URL via which the bag-drop procedure can be started - this URL is pushed towards the mobile device via the signal emitter.

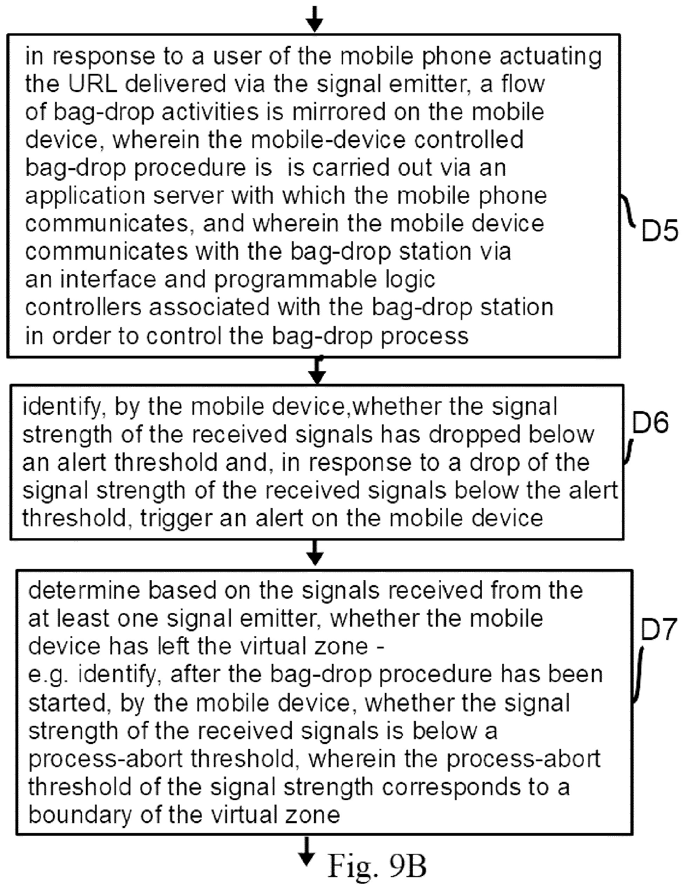

In an activity D5 (see Fig. 9B), in response to a user of the mobile phone actuating the URL delivered via the signal emitter, a flow of bag-drop activities is mirrored on the mobile device, wherein the mobile-device controlled bag-drop procedure is carried out via an application server with which the mobile phone communicates, and wherein the mobile device communicates with the bag-drop station via an interface (e.g. to a mini PC or a cloud based virtual PC) and programmable logic controllers associated with the bag-drop station in order to control the bag-drop process.

In an activity D6, it is identified, by the mobile device, whether the signal strength of the received signals has dropped below an alert threshold and, in response to a drop of the signal strength of the received signals below the alert threshold, an alert is triggered on the mobile device.

In an activity D7 it is determined based on the signals received from the at least one signal emitter, whether the mobile device has left the virtual zone. To provide an example of how this is done: it is identified, after the bag-drop procedure has been started, by the mobile device, whether the signal strength of the received signals is below a process-abort threshold, wherein the process-abort threshold of the signal strength corresponds to a boundary of the virtual zone (the area where the signal strength received by the mobile device is higher than the process-abort threshold corresponds to the virtual zone, areas where the received signal strength is below the process-abort threshold are outside the virtual zone).

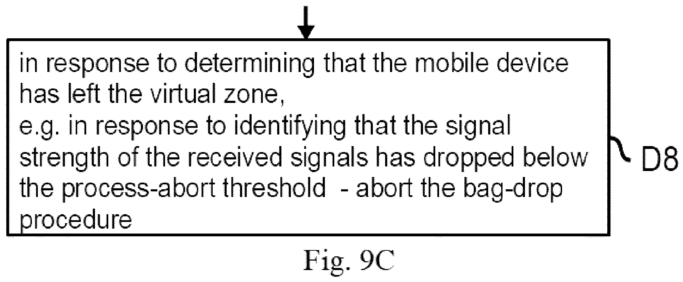

In an activity D8 (see Fig. 9C), in response to determining that the mobile device has left the virtual zone, to provide an example: in response to identifying that the signal strength of the received signals has dropped below the process-abort threshold - the mobile device controlled bag-drop procedure is aborted.

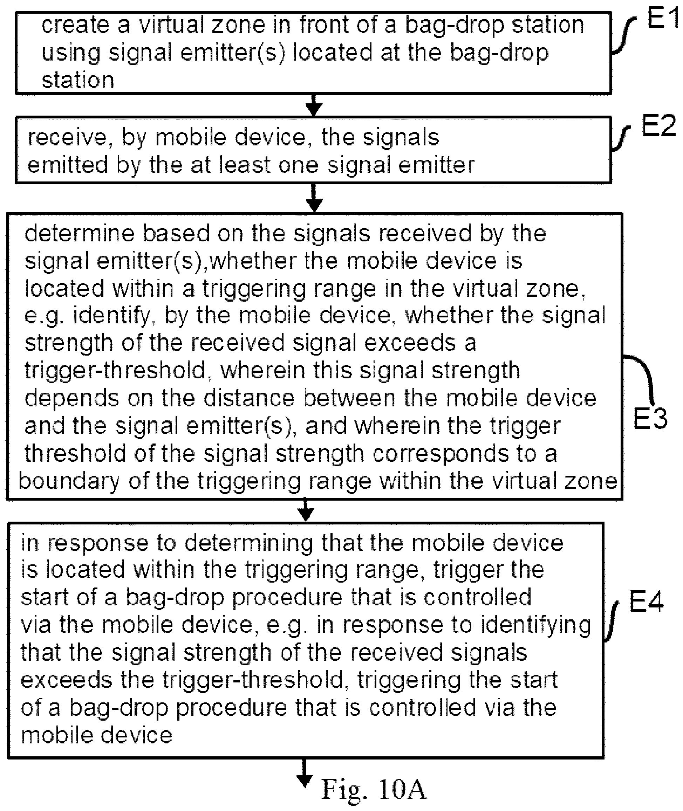

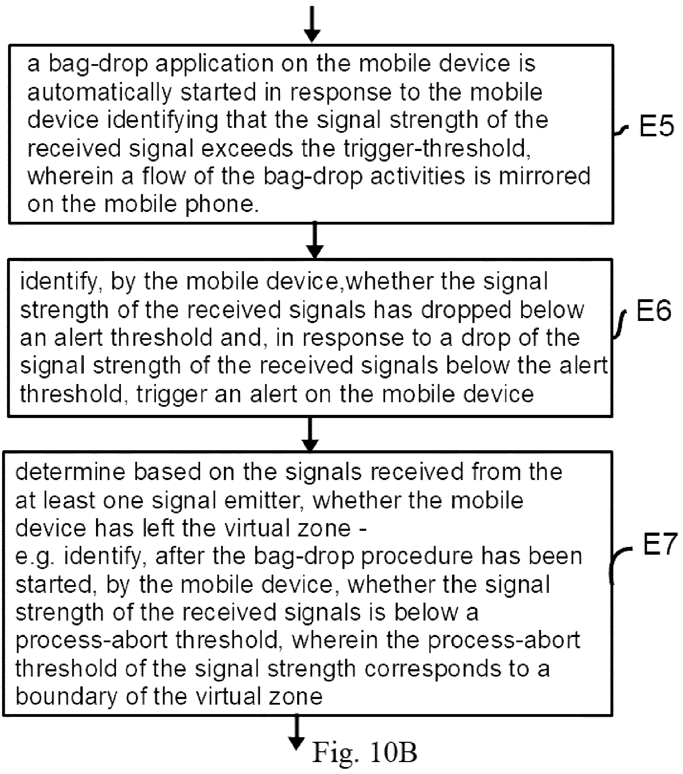

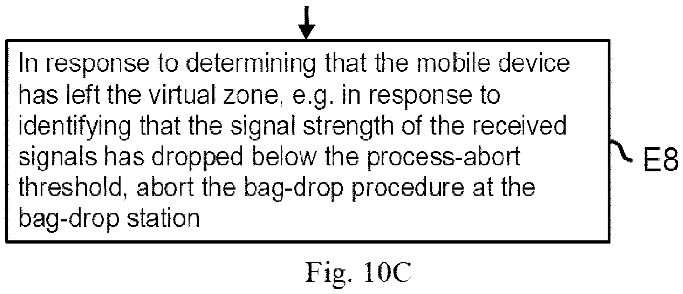

A detailed block diagram of a mobile device controlled bag-drop procedure, ensuring that the bag-drop process is aborted if the user leaves the virtual zone, with the start of the bag-drop procedure being triggered automatically at a bag-drop application on the mobile device, is given by **Figs. 10A to 10C****.**

In an activity E1 (see Fig. 10A), a virtual zone is created in front of a bag-drop station using signal emitter(s) located at the bag-drop station.

In an activity E2, the signals received by the at least one signal emitter are received by the mobile device.

In an activity E3, it is determined based on the signals received by the signal emitter(s), whether the mobile device is located within a triggering range in the virtual zone. To provide an example of how this is done: It is identified, by the mobile device, whether the signal strength of the received signal exceeds a trigger-threshold, wherein the signal strength depends on the distance between the mobile device and the signal emitter(s), and wherein the trigger threshold of the signal strength corresponds to a boundary of the triggering range within the virtual zone.

In an activity E4, in response to determining that the mobile device is located within the triggering range, trigger the start of a mobile-device controlled bag-drop procedure. To provide an example, this is done by in response to identifying that the signal strength of the received signals exceeds the trigger threshold, triggering the start of a bag-drop procedure that is controlled via the mobile device.

In an activity E5, a bag-drop application on the mobile device is automatically started in responds to the mobile device identifying that the signal strength of the received signal exceeds the trigger threshold, wherein a flow of the bag-drop activities is then mirrored on the mobile phone.

In an activity E6, it is identified by the mobile device, whether the signal strength of the received signals has dropped below an alert threshold and, in response to a drop of this signal strength below the alert threshold, an alert is triggered on the mobile device.

In an activity E7, it is determined, based on the signals received from the at least one signal emitter, whether the mobile device has left the virtual zone. To provide an example of how this is done: It is identified, after the bag-drop procedure has been started, by the mobile device, whether the signal strength of the received signals is below a process-abort threshold, wherein the process-abort threshold of the signal strength corresponds to a boundary of the virtual zone.

In an activity E8, in response to determining that the mobile device has left the virtual zone, for example, by identifying that the signal strength of the received signals has dropped below the process-abort threshold, the bag-drop procedure at the bag-drop station is aborted.

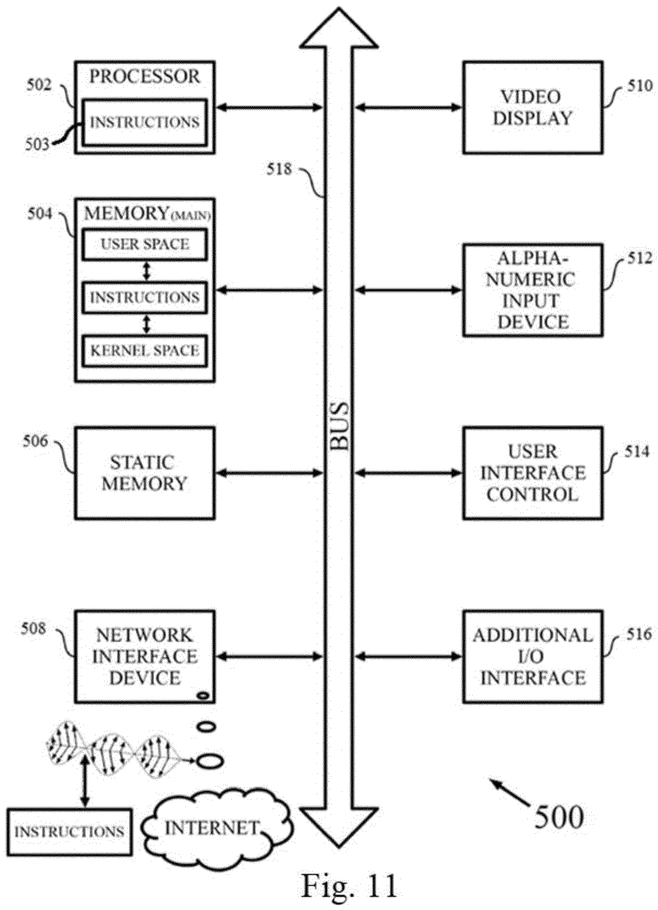

A diagrammatic representation of an exemplary computer system 500 is shown in Fig. 11. The processor 502 is arranged to execute a set of instructions 503, to cause the computer system 500 to perform any of the activities of an mobile-device controlled bag-procedure, as described herein. The computers of the distributed computer system performing the tasks of said method of baggage identification and baggage reconciliation for public transport might be arranged like this.

The computer system 500 includes a processor 502, a main memory 504 and a network interface 508. The main memory 504 includes a user space, which is associated with user-run applications, and a kernel space, which is reserved for operating-system- and hardware-associated applications. The computer system 500 further includes a static memory 506, e.g. non-removable flash and/or solid-state drive and/or a removable Micro or Mini SD card, which permanently stores software enabling the computer system 500 to execute functions of the computer system 500. Furthermore, it may include a video display 510, a user interface control module 514 and/or an alpha-numeric and cursor input device 512. Optionally, additional I/O interfaces 516, such as card reader and USB interfaces may be present. The computer system components 502 to 516 are interconnected by a data bus 518.

In some exemplary embodiments the software programmed to carry out (parts of) the method described herein is stored on the static memory 506; in other exemplary embodiments, external databases are used.

An executable set of instructions (i.e. software) 503 embodying any one, or all, of the methodologies described above, resides completely, or at least partially, permanently in the non-volatile memory 506. When being executed, process data resides in the main memory 504 and/or the processor 502.

## Claims

1. A computerized system of controlling a bag-drop process via a mobile device (3), the computerized system comprising at least one processor and at least one non-volatile memory, wherein the computerized system is arranged to:
create a virtual zone (5) in front of a bag-drop station (1) using at least two signal emitters (2, 2') located at the bag-drop station,
receive, by the mobile device (3), the signals (10) emitted by the at least two signal emitters (2, 2'),
determine based on the signals (10) received from the at least two signal emitters (2, 2'), whether the mobile device (3) is located within a triggering range (4) in the virtual zone (5),
in response to determining that the mobile device (3) is located within the triggering range (4), trigger the start of a mobile-device (3) controlled bag-drop procedure at the bag-drop station,
determine based on the signals (10) received from the at least two signal emitters (2, 2'), whether the mobile device has left the virtual zone (5),
in response to determining that the mobile device (3) has left the virtual zone (5), abort the bag-drop procedure at the bag-drop station,
wherein the bag-drop station (1) is one of a plurality of bag-drop stations (1, 1'), wherein each of the bag-drop stations (1, 1') is provided with signal emitters to define a virtual zone (5) in front of the respective bag-drop station, wherein the dimensions of the virtual zones (5) of the respective bag-drop stations (1, 1') are chosen and the distance between the respective at least two emitters of different bag-drop stations (1, 1') is chosen such that the virtual zones (5, 5') of the bag-drop stations (1, 1') do not overlap,
wherein the signal strength of the signals (10) periodically emitted by the signal emitters (2, 2') and received by the mobile device (3) defines the boundaries of the virtual zone (5) of a bag-drop station (1),
wherein the mobile device (3) determines whether it is located within the triggering range (4) by measuring the signal strength of the signals periodically received from the signal emitters (2, 2'), wherein the mobile device determines the position relative to the signal emitters (2, 2') using a range indicator sent along with the signals or trilateration of signals received by the plurality of signal emitters (2, 2').

2. The computerized system of claim 1, wherein the computerized system is arranged to
identify, by the mobile device (3), whether the signal strength of the received signals exceeds a trigger-threshold, wherein the signal strength of the received signals depends on the distance between the mobile device (3) and the at least one signal emitter of the at least two signal emitters (2, 2'),
in response to identifying that the signal strength of the received signals exceeds the trigger threshold, triggering the start of the mobile-device (3) controlled bag-drop procedure at the bag-drop station (1),
identify, after the bag-drop procedure has been started, by the mobile device (3), whether the signal strength of the received signals is below a process-abort threshold,
in response to identifying that the signal strength of the received signals has dropped below the process-abort threshold, abort the bag-drop procedure at the bag-drop station (1).

3. The computerized system of claim 2, further arranged to identify, by the mobile device (3), whether the signal strength of the received signals has dropped below an alert threshold and, in response to a drop of the signal strength of the received signals below the alert threshold, trigger an alert on the mobile device (3).

4. The computerized system of anyone of claims 1 to 3, wherein the at least one signal emitter of the at least two emitters is a Bluetooth^{®} Beacon (2, 2') for indoor geofencing.

5. The computerized system of any one of claims 1 to 4, wherein at least one signal of the signals emitted by the at least one signal emitter of the at least two emitters (2, 2') includes an URL via which the bag-drop procedure can be started.

6. The computerized system of claim 5, wherein the signal containing the URL is pushed via the signal emitter (2, 2') to the mobile device (3).

7. The computerized system of claim 5 or 6, wherein in response to a user of the mobile device (3) actuating the URL delivered via the signal emitter, a flow of the bag-drop activities is mirrored on the mobile device (3).

8. The computerized system of any one of claims 1 to 4, wherein a bag-drop application on the mobile device (3) is automatically started in response to the mobile device (3) identifying that the signal strength of the received signal exceeds the trigger-threshold, wherein a flow of the bag-drop activities is mirrored on the mobile device (3).

9. The computerized system of any one of claims 1 to 8, wherein the mobile device-controlled bag-drop procedure is carried out via an application server with which the mobile device (3) communicates.

10. The computerized system of claim 7, wherein the mobile device (3) communicates with the bag-drop (1) station by means of a mini PC and programmable logic controllers associated with the bag-drop station in order to control the bag-drop process.

11. A method of controlling a bag-drop process via a mobile device (3), the method comprising:
creating a virtual zone (5) in front of a bag-drop station (1) using at least two signal emitters (2, 2') located at the bag-drop station (1),
receiving, by the mobile device (3), the signals (10) emitted by the at least two signal emitters (2, 2'),
determining based on the signals received from the at least two signal emitters (2, 2'), whether the mobile device (3) is located within a triggering range (4) in the virtual zone (5),
in response to determining that the mobile device (3) is located within said triggering range (4), triggering the start of a mobile-device controlled bag-drop procedure at the bag-drop station (1),
determining, based on the signals received from the at least two signal emitters (2, 2'), whether the mobile device (3) has left the virtual zone,
in response to determining that the mobile device (3) has left the virtual zone, aborting the bag-drop procedure at the bag-drop station,
wherein the bag-drop station (1) is one of a plurality of bag-drop stations (1, 1'), wherein each of the bag-drop stations (1, 1') is provided with signal emitters (2, 2') to define a virtual zone (5) in front of the respective bag-drop station (1, 1'), wherein the dimensions of the virtual zones (5) of the respective bag-drop stations (1, 1') are chosen and the distance between the respective at least one signal emitter (2, 2') of different bag-drop stations (1, 1') is chosen such that the virtual zones (5, 5') of the bag-drop stations (1, 1') do not overlap,
wherein the signal strength of the signals periodically emitted by the signal emitters (2, 2') and received by the mobile device (3) defines the boundaries of the virtual zone (5) of a bag-drop station (1, 1'),
wherein the mobile device (3) determines whether it is located within the triggering range (4) by measuring the signal strength of the signals periodically received from the signal emitters (2, 2'), wherein the mobile device (3) determines the position relative to the signal emitters (2, 2') using a range indicator sent along with the signals or trilateration of signals received by the plurality of signal emitters (2, 2').

12. The method of claim 11, wherein the method comprises any of the activities the computerized system according to claims 2 to 10 is arranged to carry out.

13. A computer program product comprising program code instructions stored on a computer readable medium to execute the activities the computerized system according to claims 1 to 10 is arranged to carry out, when said program is executed on a computer device.

## Patentansprüche

1. Ein computergestütztes System zur Steuerung eines Gepäckabgabevorgangs über ein mobiles Gerät (3), wobei das computergestützte System mindestens einen Prozessor und mindestens einen nichtflüchtigen Speicher umfasst, wobei das computergestützte System dazu eingerichtet ist:
eine virtuelle Zone (5) vor einer Gepäckabgabestation (1) unter Verwendung von mindestens zwei an der Gepäckabgabestation angeordneten Signalgebern (2, 2') zu erzeugen,
von den mindestens zwei Signalgebern (2, 2') ausgesendeten Signale (10) durch das mobile Gerät (3) zu empfangen,
auf der Grundlage der von den mindestens zwei Signalgebern (2, 2') empfangenen Signale (10) zu bestimmen, ob sich das mobile Gerät (3) innerhalb eines Auslösebereichs (4) in der virtuellen Zone (5) befindet,
als Reaktion auf die Bestimmung, dass sich das Mobilgerät (3) innerhalb des Auslösebereichs (4) befindet, den Start eines vom Mobilgerät (3) gesteuerten Gepäckabgabevorgangs an der Gepäckabgabestation auszulösen,
auf der Grundlage der von den mindestens zwei Signalgebern (2, 2') empfangenen Signale (10) zu bestimmen, ob das Mobilgerät die virtuelle Zone (5) verlassen hat,
als Reaktion auf die Bestimmung, dass sich das Mobilgerät (3) außerhalb der virtuellen Zone (5) befindet, den Gepäckabgabevorgang an der Gepäckabgabestation abzubrechen,
wobei die Gepäckaufgabestation (1) eine von mehreren Gepäckaufgabestationen (1, 1') ist, wobei jede der Gepäckaufgabestationen (1, 1') mit Signalgebern ausgestattet ist, um vor der jeweiligen Gepäckaufgabestation eine virtuelle Zone (5) zu definieren, wobei die Abmessungen der virtuellen Zonen (5) der jeweiligen Gepäckaufgabestationen (1, 1') so gewählt sind und der Abstand zwischen den jeweiligen mindestens zwei Sendern verschiedener Gepäckaufgabestationen (1, 1') so gewählt ist, dass sich die virtuellen Zonen (5, 5') der Gepäckaufgabestationen (1, 1') nicht überlappen,
wobei die Signalstärke der von den Signalgebern (2, 2') periodisch ausgesendeten und vom Mobilgerät (3) empfangenen Signale (10) die Grenzen der virtuellen Zone (5) einer Gepäckabgabestation (1) definiert,
wobei das mobile Gerät (3) durch Messung der Signalstärke der periodisch von den Signalgebern (2, 2') empfangenen Signale bestimmt, ob es sich innerhalb des Auslösebereichs (4) befindet, wobei das mobile Gerät die Position relativ zu den Signalgebern (2, 2') unter Verwendung eines zusammen mit den Signalen gesendeten Entfernungsindikators oder durch Trilateration der von den mehreren Signalgebern (2, 2') empfangenen Signale bestimmt.

2. Das computergestützte System nach Anspruch 1, wobei das computergestützte System eingerichtet ist,
durch das mobile Gerät (3) zu bestimmen, ob die Signalstärke der empfangenen Signale einen Auslöseschwellenwert überschreitet, wobei die Signalstärke der empfangenen Signale von der Entfernung zwischen dem mobilen Gerät (3) und dem mindestens einen Signalgeber der mindestens zwei Signalgeber (2, 2') abhängt,
als Reaktion auf die Bestimmung, dass die Signalstärke der empfangenen Signale den Auslöseschwellenwert überschreitet, den Start des vom Mobilgerät (3) gesteuerten Gepäckabgabevorgangs an der Gepäckabgabestation (1) auszulösen,
zu bestimmen, nachdem der Gepäckabgabevorgang durch das mobile Gerät (3) gestartet wurde, ob die Signalstärke der empfangenen Signale unter einem Schwellenwert für den Abbruch des Vorgangs liegt,
als Reaktion auf die Bestimmung, dass die Signalstärke der empfangenen Signale unter dem Schwellenwert für den Abbruch des Vorgangs gefallen ist, den Gepäckabgabevorgang an der Gepäckabgabestation (1) abzubrechen.

3. Das computergestützte System nach Anspruch 2, das ferner so ausgelegt ist, dass mittels des mobilen Geräts (3) bestimmt wird, ob die Signalstärke der empfangenen Signale unter einen Alarmschwellenwert gefallen ist, und als Reaktion auf ein Absinken der Signalstärke der empfangenen Signale unter den Alarmschwellenwert ein Alarm auf dem mobilen Gerät (3) ausgelöst wird.

4. Das computergestützte System nach einem der Ansprüche 1 bis 3, wobei der mindestens eine Signalgeber der mindestens zwei Geber ein Bluetooth^{®}-Beacon (2, 2') für Indoor-Geofencing ist.

5. Das computergestützte System nach einem der Ansprüche 1 bis 4, wobei mindestens eines der von dem mindestens einen Signalgeber der mindestens zwei Geber (2, 2') ausgesendeten Signale eine URL enthält, über die der Gepäckabgabevorgang gestartet werden kann.

6. Das computergestützte System nach Anspruch 5, wobei das die URL enthaltende Signal über den Signalgeber (2, 2') an das mobile Gerät (3) gesendet wird.

7. Das computergestützte System nach Anspruch 5 oder 6, wobei als Reaktion darauf, dass ein Benutzer des mobilen Geräts (3) die über den Signalgeber übermittelte URL aufruft, ein Ablauf der Gepäckabgabe-Aktivitäten auf dem mobilen Gerät (3) angezeigt wird.

8. Das computergestützte System nach einem der Ansprüche 1 bis 4, wobei eine Gepäckabgabe-Anwendung auf dem Mobilgerät (3) automatisch gestartet wird, wenn das Mobilgerät (3) bestimmt, dass die Signalstärke des empfangenen Signals den Auslöseschwellenwert überschreitet, wobei der Ablauf der Gepäckabgabe-Aktivitäten auf dem Mobilgerät (3) abgebildet wird.

9. Das computergestützte System nach einem der Ansprüche 1 bis 8, wobei der durch das mobile Gerät gesteuerte Gepäckabgabevorgang über einen Anwendungsserver durchgeführt wird, mit dem das mobile Gerät (3) kommuniziert.

10. Das computergestützte System nach Anspruch 7, wobei das mobile Gerät (3) mit der Gepäckaufgabestation (1) über einen Mini-PC und speicherprogrammierbare Steuerungen kommuniziert, die der Gepäckaufgabestation zugeordnet sind, um den Gepäckaufgabeprozess zu steuern.

11. Verfahren zur Steuerung eines Gepäckaufgabeprozesses über ein mobiles Gerät (3), wobei das Verfahren umfasst:
Erzeugen einer virtuellen Zone (5) vor einer Gepäckaufgabestation (1) unter Verwendung von mindestens zwei an der Gepäckaufgabestation (1) angeordneten Signalgebern (2, 2'),
Empfangen der von den mindestens zwei Signalgebern (2, 2') ausgesendeten Signale (10) durch das mobile Gerät (3),
auf der Grundlage der von den mindestens zwei Signalgebern (2, 2') empfangenen Signale, bestimmen, ob sich das mobile Gerät (3) innerhalb eines Auslösebereichs (4) in der virtuellen Zone (5) befindet,
als Reaktion auf die Bestimmung, dass sich das mobile Gerät (3) innerhalb des Auslösebereichs (4) befindet, Auslösen des Starts eines durch das mobile Gerät gesteuerten Gepäckabgabevorgangs an der Gepäckabgabestation (1),
auf der Grundlage der von den mindestens zwei Signalgebern (2, 2') empfangenen Signale bestimmen, ob das Mobilgerät (3) die virtuelle Zone verlassen hat,
als Reaktion auf die Bestimmung, dass sich das Mobilgerät (3) außerhalb der virtuellen Zone befindet, Abbrechen des Gepäckabgabevorgangs an der Gepäckabgabestation,
wobei die Gepäckabgabestation (1) eine von mehreren Gepäckabgabestationen (1, 1') ist, wobei jede der Gepäckabgabestationen (1, 1') mit Signalgebern (2, 2') ausgestattet ist, um einen virtuellen Bereich (5) vor der jeweiligen Gepäckabgabestation zu definieren (1, 1') zu definieren, wobei die Abmessungen der virtuellen Zonen (5) der jeweiligen Gepäckabgabestationen (1, 1') so gewählt sind und der Abstand zwischen dem jeweiligen mindestens einen Signalgeber (2, 2') verschiedener Gepäckaufgabestationen (1, 1') so gewählt sind, dass sich die virtuellen Zonen (5, 5') der Gepäckaufgabestationen (1, 1') nicht überlappen,
wobei die Signalstärke der von den Signalgebern (2, 2') periodisch ausgesendeten und vom Mobilgerät (3) empfangenen Signale die Grenzen der virtuellen Zone (5) einer Gepäckaufgabestation (1, 1') definiert,
wobei das mobile Gerät (3) durch Messung der Signalstärke der periodisch von den Signalgebern (2, 2') empfangenen Signale bestimmt, ob es sich innerhalb des Auslösebereichs (4) befindet, wobei das mobile Gerät (3) die Position relativ zu den Signalgebern (2, 2') mithilfe eines zusammen mit den Signalen gesendeten Entfernungsindikators oder durch Trilateration der von den mehreren Signalgebern (2, 2') empfangenen Signale bestimmt.

12. Verfahren nach Anspruch 11, wobei das Verfahren eine beliebige der Aktivitäten umfasst, zu deren Ausführung das computergestützte System gemäß den Ansprüchen 2 bis 10 eingerichtet ist.

13. Ein Computerprogrammprodukt, das auf einem computerlesbaren Medium gespeicherte Programmcode-Anweisungen umfasst, um die Aktivitäten auszuführen, zu deren Durchführung das computergestützte System gemäß den Ansprüchen 1 bis 10 eingerichtet ist, wenn das Programm auf einem Computergerät ausgeführt wird.

## Revendications

1. Système informatisé de commande d'un processus de dépôt de sacs par l'intermédiaire d'un dispositif mobile (3), le système informatisé comprenant au moins un processeur et au moins une mémoire non volatile, dans lequel le système informatisé est conçu pour :
créer une zone virtuelle (5) devant un poste de dépôt de sacs (1) à l'aide d'au moins deux émetteurs de signaux (2, 2') situés au poste de dépôt de sacs,
recevoir, par le dispositif mobile (3), les signaux (10) émis par les au moins deux émetteurs de signaux (2, 2'),
déterminer sur la base des signaux (10) reçus des au moins deux émetteurs de signaux (2, 2'), si le dispositif mobile (3) est situé à l'intérieur d'une plage de déclenchement (4) dans la zone virtuelle (5),
s'il est déterminé que le dispositif mobile (3) est situé dans la plage de déclenchement (4), déclencher le démarrage d'une opération de dépôt de sacs commandée par dispositif mobile (3) au poste de dépôt de sacs,
déterminer sur la base des signaux (10) reçus des au moins deux émetteurs de signaux (2, 2'), si le dispositif mobile a quitté la zone virtuelle (5),
s'il est déterminé que le dispositif mobile (3) a quitté la zone virtuelle (5), interrompre l'opération de dépôt de sacs au poste de dépôt de sacs,
dans lequel le poste de dépôt de sacs (1) est l'un d'une pluralité de postes de dépôt de sacs (1, 1'), dans lequel chacun des postes de dépôt de sacs (1, 1') est muni d'émetteurs de signaux pour définir une zone virtuelle (5) devant le poste de dépôt de sacs respectif, dans lequel les dimensions des zones virtuelles (5) des postes de dépôt de sacs (1, 1') respectifs sont choisies et la distance entre les au moins deux émetteurs respectifs de différents postes de dépôt de sacs (1, 1') est choisie de sorte que les zones virtuelles (5, 5') des postes de dépôt de sacs (1, 1') ne se chevauchent pas,
dans lequel l'intensité de signal des signaux (10) émis périodiquement par les émetteurs de signaux (2, 2') et reçus par le dispositif mobile (3) définit les limites de la zone virtuelle (5) d'un poste de dépôt de sacs (1),
dans lequel le dispositif mobile (3) détermine s'il est situé dans la plage de déclenchement (4) en mesurant l'intensité de signal des signaux reçus périodiquement des émetteurs de signaux (2, 2'), dans lequel le dispositif mobile détermine la position par rapport aux émetteurs de signaux (2, 2') à l'aide d'un indicateur de portée envoyé avec les signaux ou d'une trilatération de signaux reçus par la pluralité d'émetteurs de signaux (2, 2').

2. Système informatisé selon la revendication 1, dans lequel le système informatisé est conçu pour
identifier, par le dispositif mobile (3), si l'intensité de signal des signaux reçus dépasse un seuil de déclenchement, dans lequel l'intensité de signal des signaux reçus dépend de la distance entre le dispositif mobile (3) et l'au moins un émetteur de signal des au moins deux émetteurs de signaux (2, 2'),
s'il est identifié que l'intensité de signal des signaux reçus dépasse le seuil de déclenchement, déclencher le démarrage de l'opération de dépôt de sacs commandée par dispositif mobile (3) au poste de dépôt de sacs (1),
identifier, après le démarrage de l'opération de dépôt de sacs, par le dispositif mobile (3), si l'intensité de signal des signaux reçus est inférieure à un seuil d'interruption de processus,
s'il est identifié que l'intensité de signal des signaux reçus a chuté au-dessous du seuil d'interruption de processus, interrompre l'opération de dépôt de sacs au poste de dépôt de sacs (1).

3. Système informatisé selon la revendication 2, en outre conçu pour identifier, par le dispositif mobile (3), si l'intensité de signal des signaux reçus a chuté au-dessous d'un seuil d'alerte et, si l'intensité de signal des signaux reçus a chuté au-dessous du seuil d'alerte, déclencher une alerte sur le dispositif mobile (3).

4. Système informatisé selon l'une quelconque des revendications 1 à 3, dans lequel l'au moins un émetteur de signal des au moins deux émetteurs est une balise Bluetooth^{®} (2, 2') pour le géorepérage en intérieur.

5. Système informatisé selon l'une quelconque des revendications 1 à 4, dans lequel au moins un signal des signaux émis par l'au moins un émetteur de signal des au moins deux émetteurs (2, 2') inclut une URL via laquelle peut être démarrée l'opération de dépôt de sacs.

6. Système informatisé selon la revendication 5, dans lequel le signal contenant l'URL est poussé via l'émetteur de signal (2, 2') vers le dispositif mobile (3).

7. Système informatisé selon la revendication 5 ou 6, dans lequel, en réponse à un utilisateur du dispositif mobile (3) activant l'URL fournie par l'intermédiaire de l'émetteur de signal, un flux des activités de dépôt de sacs est reflété sur le dispositif mobile (3).

8. Système informatisé selon l'une quelconque des revendications 1 à 4, dans lequel une application de dépôt de sacs sur le dispositif mobile (3) est automatiquement démarrée en réponse au dispositif mobile (3) identifiant que l'intensité de signal reçu dépasse le seuil de déclenchement, dans lequel un flux des activités de dépôt de sacs est reflété sur le dispositif mobile (3).

9. Système informatisé selon l'une quelconque des revendications 1 à 8, dans lequel l'opération de dépôt de sacs commandée par dispositif mobile est effectuée par l'intermédiaire d'un serveur d'application avec lequel communique le dispositif mobile (3).

10. Système informatisé selon la revendication 7, dans lequel le dispositif mobile (3) communique avec le poste de dépôt de sacs (1) au moyen d'un mini-PC et de contrôleurs logiques programmables associés au poste de dépôt de sacs afin de commander le processus de dépôt de sacs.

11. Méthode de commande d'un processus de dépôt de sacs par l'intermédiaire d'un dispositif mobile (3), la méthode comprenant :
la création d'une zone virtuelle (5) devant un poste de dépôt de sacs (1) à l'aide d'au moins deux émetteurs de signaux (2, 2') situés au niveau du poste de dépôt de sacs (1),
la réception, par le dispositif mobile (3), des signaux (10) émis par les au moins deux émetteurs de signaux (2, 2'),
la détermination sur la base des signaux reçus des au moins deux émetteurs de signaux (2, 2'), si le dispositif mobile (3) est situé dans une plage de déclenchement (4) dans la zone virtuelle (5),
s'il est déterminé que le dispositif mobile (3) est situé dans ladite plage de déclenchement (4), le déclenchement du démarrage d'une opération de dépôt de sacs commandée par dispositif mobile au poste de dépôt de sacs (1),
la détermination, sur la base des signaux reçus des au moins deux émetteurs de signaux (2, 2'), si le dispositif mobile (3) a quitté la zone virtuelle,
s'il est déterminé que le dispositif mobile (3) a quitté la zone virtuelle, l'interruption de l'opération de dépôt de sacs au poste de dépôt de sacs,
dans laquelle le poste de dépôt de sacs (1) est l'un d'une pluralité de postes de dépôt de sacs (1, 1'), dans laquelle chacun des postes de dépôt de sacs (1, 1') est muni d'émetteurs de signaux (2, 2') pour définir une zone virtuelle (5) devant le poste de dépôt de sacs (1, 1') respectif, dans laquelle les dimensions des zones virtuelles (5) des postes de dépôt de sacs (1, 1') respectifs sont choisies et la distance entre l'au moins un émetteur de signal (2, 2') de différents postes de dépôt de sacs (1, 1') est choisie de sorte que les zones virtuelles (5, 5') des postes de dépôt de sacs (1, 1') ne se chevauchent pas,
dans laquelle l'intensité de signal des signaux périodiquement émis par les émetteurs de signaux (2, 2') et reçus par le dispositif mobile (3) définit les limites de la zone virtuelle (5) d'un poste de dépôt de sacs (1, 1'),
dans laquelle le dispositif mobile (3) détermine s'il est situé dans la plage de déclenchement (4) en mesurant l'intensité de signal des signaux reçus périodiquement des émetteurs de signaux (2, 2'), dans laquelle le dispositif mobile (3) détermine la position par rapport aux émetteurs de signaux (2, 2') à l'aide d'un indicateur de portée envoyé avec les signaux ou d'une trilatération de signaux reçus par la pluralité d'émetteurs de signaux (2, 2').

12. Méthode selon la revendication 11, dans laquelle la méthode comprend l'une quelconque des activités que le système informatisé selon les revendications 2 à 10 est conçu pour effectuer.

13. Produit-programme d'ordinateur comprenant des instructions de code de programme stockées sur un support lisible par ordinateur pour exécuter les activités du système informatisé selon les revendications 1 à 10, lorsque ledit programme est exécuté sur un ordinateur.
